Europäisches Patentamt

European Patent Office

Office européen des brevets

(11) Veröffentlichungsnummer: **0 109 389**
**A1**

(12) # EUROPÄISCHE PATENTANMELDUNG

(21) Anmeldenummer: 83890204.7

(22) Anmeldetag: 10.11.88

(51) Int. Cl.³: **F 41 B 13/02**

(30) Priorität: 16.11.82 AT 4165/82

(43) Veröffentlichungstag der Anmeldung: 23.05.84
Patentblatt 84/21

(84) Benannte Vertragsstaaten: AT DE FR IT SE

(71) Anmelder: **VEREINIGTE EDELSTAHLWERKE
AKTIENGESELLSCHAFT (VEW),** Elisabethstrasse 12,
A-1010 Wien (AT)

(72) Erfinder: **Eichler, Norbert,** Leopold Weber Strasse 7,
A-3333 Böhlerwerk (AT)

(74) Vertreter: Widtmann, Georg, Dr., Vereinigte
Edelstahlwerke Aktiengesellschaft (VEW)
Elisabethstrasse 12, A-1010 Wien (AT)

(54) **Klinge aus Stahl für Stich- und insbesondere Fechtwaffen.**

(57) Hieb- und Stichwaffen sind bei ihrem Einsatz, insbesondere bei sportlicher Verwendung, einer starken Beanspruchung ausgesetzt. Besonders nachteilig sind hiebei die, z.B. beim Fechten, auf den Klingen erzeugten Kerbstellen. Diese Kerbstellen können zu folgeschweren Brüchen der Klingen führen. Mit einer Klinge folgenden Aufbaues ist ein Bruch der Seiten in der Regel zu vermeiden. Die Klinge besteht aus einem Verbundstahl, welcher in seinem Innenbereich mit einem weicheren Kernwerkstoff einer Härte von höchstens 30 HRC an dem zumindest ein härtbarer Stahl, vorzugsweise im wesentlichen den Innenbereich umhüllend, angrenzt, aufgebaut ist.

ACTORUM AG

- 1 -

## Klinge aus Stahl für Stich- und insbesondere Fechtwaffen

Die Klingen von Stichwaffen und speziell von Fechtwaffen zeichnen sich dadurch aus, daß sie eine im Verhältnis zum Querschnitt beträchtliche Länge aufweisen, mit der Konsequenz, daß an die Biegsamkeit bzw. Biegefestigkeit derselben und insbesondere der Klingenspitzen sehr hohe Anforderungen gestellt sind.

Weil die Fechtwaffen, wie Degen, Säbel, Florett im Gebrauch zwangsläufig mit Einkerbungen versehen werden, die nur allzuleicht die Basis für die Ausbildung eines Bruches und damit gegebenenfalls schwerer Unfälle abgeben können, stellt die Bruchgefahr solcher Klingen ein akutes Problem dar, mit dessen Lösung sich die vorliegende Erfindung befaßt.

In der aus dem Jahre 1912 stammenden FR-PS 439 666 ist der Vorschlag beschrieben, eine auf den Querschnitt bezogen vom Zentrum nach drei Seiten hin etwa V-förmig zugespitzte Degenklinge zuerst mit einer tief in den Zentrumsbereich ragenden schlitzförmigen Nut zu versehen, diese Nut sodann außen durch eine mechanische Verformung zu verschließen, um auf diese Weise im Inneren der Klinge eine seelenähnliche Höhlung auszubilden und in diese Höhlung einen oder mehrere Stahldrähte einzuschieben, wobei als Zweck dieser Maßnahmen die Absicht erwähnt ist, die Unfallgefahr auf Grund eines Bruches herabzusetzen. Abgesehen davon, daß die Herstellungsweise einer solchen Klinge äußerst umständlich ist, kann auch die angebotene Lösung keineswegs befriedigen, denn die Längsnut stellt ja mit der Aufteilung des Klingenwerkstoffes in nahezu zwei Hälften eine beträchtliche Schwächung der Bruchsicherheit dar, und die zugespitzte Form der Degenklinge bedingt zwangsläufig, daß ein gleichmäßiger Höhlungsdurchmesser gar nicht erzielbar ist, mit der Konsequenz, daß ein von der Degenspitze in das Sackloch eingeführter Stahldraht mit einem gleichbleibenden Querschnitt keinen allseitigen Berührungsschluß mit der Klingenwandung entlang der Höhlung erbringen kann. Es ist somit nicht verwunderlich, daß dieser Vorschlag keinerlei praktische Bedeutung erlangt hat.

Praktisch ohne Einbuße hinsichtlich der übrigen, an die Klinge gestellten technologischen Anforderungen kann die Bruchgefahr in für die Fachwelt höchst überraschender Weise besonders gering gehalten werden, wenn die Klinge aus einem Verbundstahl, welcher in seinem Innenbereich mit einem weicheren Kernwerkstoff einer Härte von höchstens 30 HRC, an dem zumindest ein härtbarer Stahl, vorzugsweise im wesentlichen den Innenbereich umhüllend, angrenzt, aufgebaut ist.

Dabei soll vorteilhaft der Anteil des weicheren Kernwerkstoffes bezogen auf den jeweiligen Klingenquerschnitt höchstens 1/3 der Querschnittsfläche betragen.

Gemäß einem bevorzugten weiteren Erfindungsmerkmal beträgt die Differenz der Härtewerte zwischen härtbarem Stahl und Kernwerkstoff zumindest 20 HRC, womit einerseits die Bruchgefahr besonders gering gehalten und anderseits ein vollkommen unverändertes Reflexionsvermögen der Klinge, d.h. Fechtverhalten und Klang, erreichbar ist.

Als vorteilhaft ist es anzusehen, wenn als Kernwerkstoff ein austenitischer Chrom-Nickel-Stahl, ein austenitischer Manganstahl oder ein Einsatzstahl verwendet ist.

Die Erfindung umfaßt auch ein Verfahren zur Herstellung der Klingen, das dadurch gekennzeichnet ist, daß ein stabförmiger Verbundwerkstoff aus dem härtbaren Klingenstahl mit einer im wesentlichen zentrisch angeordneten Seele aus dem Kernwerkstoff hergestellt und daraus durch Schmieden oder Reckwalzen die Klinge ausgeformt wird.

0109389

- 3 -

In diesem Zusammenhang wird bemerkt, daß es bei der Herstellung der Klingen vorkommen kann, daß der Kernwerkstoff bis zum Rand des Klingenwerkstoffes vordringt, ohne daß dies jedoch mit irgendwelchen Nachteilen verbunden ist.

Die Erfindung wird nun an Hand eines Ausführungsbeispieles näher erläutert, das sich auf die Herstellung und die Eigenschaften eines Floretts mit einer Klingenlänge von 900 mm und quadratischer Querschnittsform bezieht.

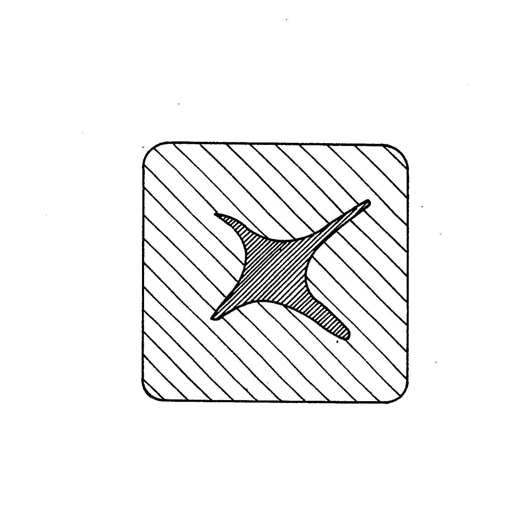

Zunächst wurde ein Verbundstahl hergestellt, indem ein quadratischer Zaggel aus einem Ni-hältigen Werkzeugstahl (DIN-Bezeichnung: 56 NiCrMoV 7) von 90 mm mit einer zentralen Bohrung von 30 mm Durchmesser versehen und diese mit einem als Kernwerkstoff satt eingepaßten Rundstab aus austenitischem Chrom-Nickel-Stahl (DIN-Bezeichnung: X 5 CrNiMo 18 12) ausgefüllt wird. Nach Anbringung einer den Fugenbereich auf jeder Stirnseite überdeckenden Schweißnaht wurde durch Warmwalzen in üblicher Weise eine Querschnittsverminderung des Zaggels auf etwa 1/6 seiner ursprünglichen Dimension, somit also auf etwa 15 mm Kantenbreite vorgenommen und der metallische Verbund zwischen dem Kernwerkstoff und der äußeren Hülle hergestellt. Die sich durch das im fortlaufenden Wechsel der Seitenflächen praktizierte Warmwalzen ergebende verzahnte Formgebung des Kernwerkstoffes im Klingenrohling ist in Fig. 1 dargestellt, die einen Querschliff dieses Rohlings in vergrößerter schematischer Darstellung zeigt.

Aus dem entsprechend abgelängten Klingenrohling wurde sodann durch Schmieden die eigentliche Florettklinge mit ihrer konischen Form (von quadrat 10 mm am Klingenende abnehmend auf quadrat 3 mm an der Spitze) geformt und durch eine Wärmebehandlung die Härte des härtbaren Stahles auf 50 HRC gebracht, wobei der Kernwerkstoff eine solche von 18 HRC aufwies.

- 4 -

Die Überprüfung der Biegefestigkeit dieser Klinge ergab, daß sich selbst bei einer bleibenden Verformung von 90° beim Test (Abstand der Auflagepunkte: 60 mm) kein Bruch ergab, während Brüche bei vergleichsweise überprüften Klingen aus dem analogen härtbaren Werkstoff als Vollklinge bereits bei 5° auftraten und bei entsprechend der Erfindung hergestellten weiteren Klingen unter Verwendung eines Einsatzstahles (15 CrNi 6) als Kernwerkstoff eine Biegefestigkeit bis zur bleibenden Verformung von 20° ermittelt wurde. Dies entspricht der Erwartung, daß mit Einsatzstählen als Kernwerkstoff im Rahmen der Erfindung eine bedeutende Verbesserung der Biegefestigkeit der Klingen erreicht werden kann, daß aber mit austenitischem Kernwerkstoff ein Höchstausmaß an Bruchsicherheit erzielbar ist.

0109389

- 5 -

Patentansprüche:

1. Klinge aus Stahl, für Stich- und insbesondere Fechtwaffen, die mit zumindest zwei unterschiedlichen Werkstoffen aufgebaut ist, wobei ein im Innenbereich der Klinge vorgesehener Werkstoff von zumindest einem weiteren Werkstoff benachbart bzw. umgeben ist, dadurch gekennzeichnet, daß die Klinge aus einem Verbundstahl, welcher in seinem Innenbereich mit einem weicheren Kernwerkstoff einer Härte von höchstens 30 HRC, an dem zumindest ein härtbarer Stahl, vorzugsweise im wesentlichen den Innenbereich umhüllend, angrenzt, aufgebaut ist.

2. Klinge nach Anspruch 1, dadurch gekennzeichnet, daß der Anteil des weicheren Kernwerkstoffes bezogen auf den jeweiligen Klingenquerschnitt höchstens 1/3 der Querschnittsfläche beträgt.

3. Klinge nach den Ansprüchen 1 und 2, dadurch gekennzeichnet, daß die Differenz der Härtewerte zwischen härtbarem Stahl und Kernwerkstoff zumindest 20 HRC beträgt.

4. Klinge nach den Ansprüchen 1 bis 3, dadurch gekennzeichnet, daß als Kernwerkstoff ein austenitischer Chrom-Nickel-Stahl, ein austenitischer Manganstahl oder ein Einsatzstahl verwendet ist.

5. Verfahren zur Herstellung der Klinge nach einem der Ansprüche 1 bis 4, dadurch gekennzeichnet, daß ein stabförmiger Verbundwerkstoff aus dem härtbaren Stahl mit einer im wesentlichen zentrisch angeordneten Seele aus dem Kernwerkstoff hergestellt und daraus durch Schmieden oder Reckwalzen die Klinge ausgeformt wird.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-C- 186 493 (BAUDAT)<br>* Zeichnung; Seite 1, Zeilen 1-5, 48-66; Seite 2, Zeilen 1-3 *<br>--- | 1-3,5 | F 41 B 13/02 |
| Y | GB-A-1 054 227 (KNAUSCHNER)<br>* Zeichnung; Seite 1, Zeilen 33-49; Seite 2, Zeilen 24-37 *<br>--- | 1-3,5 | |
| A,D | FR-A- 439 666 (BOUGNOL et al.)<br>--- | | |
| A | US-A-1 630 631 (PAULY)<br><br>* Seite 1, Zeilen 29-34 *<br>----- | | |

RECHERCHIERTE
SACHGEBIETE (Int. Cl. ³)

F 41 B
B 21 D
B 21 H
B 21 K
B 23 P
B 32 B

Der vorliegende Recherchenbericht wurde für alle Patentansprüche erstellt.

| Recherchenort | Abschlußdatum der Recherche | Prüfer |
|---|---|---|
| DEN HAAG | 22-02-1984 | FISCHER G.H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82